(19) **Europäisches Patentamt European Patent Office Office européen des brevets**

(11) **EP 1 746 675 B1**

(12) **EUROPEAN PATENT SPECIFICATION**

(45) Date of publication and mention of the grant of the patent:
**02.01.2013 Bulletin 2013/01**

(51) Int Cl.:
*H01M 10/0525* (2010.01)  *H01M 4/62* (2006.01)
*H01M 10/0567* (2010.01)  *H01M 4/13* (2010.01)
*H01M 10/058* (2010.01)

(21) Application number: **05739221.9**

(22) Date of filing: **13.05.2005**

(86) International application number:
**PCT/JP2005/008762**

(87) International publication number:
**WO 2005/112150 (24.11.2005 Gazette 2005/47)**

(54) **LITHIUM ION SECONDARY BATTERY AND METHOD FOR PRODUCING SAME**

LITHIUMIONEN-SEKUNDÄRBATTERIE UND HERSTELLUNGSVERFAHREN DAFÜR

BATTERIE SECONDAIRE IONIQUE AU LITHIUM ET PROCEDE DE FABRICATION DE LADITE BATTERIE

(84) Designated Contracting States:
**DE FR GB**

(30) Priority: **14.05.2004 JP 2004145470**

(43) Date of publication of application:
**24.01.2007 Bulletin 2007/04**

(73) Proprietors:
• **Panasonic Corporation
Kadoma-shi
Osaka 571-8501 (JP)**
• **Zeon Corporation
Tokyo 100-8246 (JP)**

(72) Inventors:
• **OHATA, Tsumoru, c/o Matsushita Electr. Ind.
Co.Ltd
Osaka 540-6319 (JP)**

• **NAKAJIMA, Junji, c/o Matsushita Electr.
Ind.Co.Ltd
Osaka 540-6319 (JP)**
• **INOUE, Kaoru, c/o Matsushita Electr. Ind. Co.Ltd
Osaka 540-6319 (JP)**
• **NAKAMURA, Eitaro, c/o ZEON Corp.
Tokyo 100-8246 (JP)**

(74) Representative: **Leinweber & Zimmermann
European Patent Attorneys
Patentanwälte
Rosental 7
80331 München (DE)**

(56) References cited:
JP-A- 10 214 640    JP-A- 11 288 720
JP-A- 11 297 328    JP-A- 2000 021 386
JP-A- 2000 311 709

**Description**

Technical Field

The present invention relates to a lithium ion secondary battery, and, mainly, to an improvement in life characteristics of lithium ion secondary batteries.

Background Art

Lithium ion secondary batteries have an electrode plate assembly composed of a positive electrode, a negative electrode, and a separator interposed therebetween for retaining a non-aqueous electrolyte. The positive electrode comprises a positive electrode substrate and a positive electrode material mixture layer carried on the positive electrode substrate, while the negative electrode comprises a negative electrode substrate and a negative electrode material mixture layer carried on the negative electrode substrate. The separator is a microporous sheet containing polyethylene resin or the like. The positive or negative electrode material mixture layer contains an electrode active material and an electrode binder, and the electrode binder that has been conventionally used is thermoplastic resin or modified rubber material.

To produce a positive or negative electrode, first, an electrode material mixture slurry is prepared by mixing an electrode material that contains an electrode active material and an electrode formative binder with an electrode formative dispersion medium. The resultant electrode material mixture slurry is applied onto an electrode substrate, and the applied slurry is dried to form an electrode material mixture layer. The drying temperature is usually 130°C or lower, and hot air is used for drying. The dried electrode material mixture layer is roll pressed, and the electrode substrate and the electrode material mixture layer are cut together to a predetermined shape, to obtain a desired electrode.

Recently, to improve the quality of lithium ion secondary batteries, a technique to adhere a porous film to an electrode surface has been proposed. To adhere a porous film to an electrode surface, first, a porous film paste is prepared by mixing a film forming material that contains an inorganic filler and a film binder with a film formative dispersion medium. Subsequently, the porous film paste is applied onto an electrode material mixture layer, and the applied paste is dried to form a porous film (see Patent Document 1).

Conventionally, the electrode binder contained in the electrode material mixture is resin material that dissolves or uniformly disperses in the electrode formative dispersion medium used to prepare the electrode material mixture slurry. Also, the film binder contained in the porous film is resin material that dissolves or uniformly disperses in the film formative dispersion medium used to prepare the porous film paste. As the electrode formative dispersion medium and the film formative dispersion medium, for example, N-methyl-2-pyrrolidone (NMP) is used. Patent Document 1: Patent No: JP 3371301

Disclosure of Invention

Problem That the Invention Is to Solve

Generally, in order to dissolve or uniformly disperse a film binder in a film formative dispersion medium, the film binder needs to have high affinity for the film formative dispersion medium. When NMP, which is the most common film formative dispersion medium, is used, a material with a solubility parameter from approximately 9 to 11 is selected as the film binder, in order to obtain a homogeneous applied film free from lumps of the binder or unevenness. As a result, a porous film with stable quality can be formed with a high yield.

However, when such a film binder as described above is used, the film binder may dissolve in an electrolyte or swell therewith to cause degradation of battery performance, depending on the combination of the film binder and the solvent species of the non-aqueous electrolyte. This is because the swelling of the film binder causes the pores of the porous film to be closed, or the dissolution thereof causes the conductivity of the electrolyte to lower.

That is, the problem to be solved by the present invention is to heighten the quality in the production process of a porous film, provide a porous film that offers excellent battery performance, and provide a battery having both good safety and good battery performance.

Means for Solving the Problem

The present inventors have found that the above-mentioned problem occurs particularly when the solubility parameter of a film binder that dissolves or uniformly disperses in a dispersion medium is close to the solubility parameter of a non-aqueous solvent of a non-aqueous electrolyte. They have conducted a close study of the relation between the solubility parameter of the film binder and the solubility parameter of the non-aqueous solvent. As a result, they have completed the present invention.

Solubility parameter is an index that shows the polarity of a substance and, for example, it indicates the affinity between substances. Generally, when substances have closer solubility parameters, the substances have better compatibility (see Dictionary of Physics, published by BAIFUKAN Co., Ltd.). For example, the solubility parameter of such a dispersion medium as NMP is close to the solubility parameter of a non-aqueous solvent containing a carbonic ester, and they have high compatibility. It is therefore believed that a film binder that dissolves or uniformly disperses in a film formative dispersion medium is highly compatible with a non-aqueous solvent containing a carbonic ester and tends to swell with the non-aqueous solvent.

In view of the above, the present invention relates to a lithium ion secondary battery including: (a) a positive electrode comprising a positive electrode substrate, and a positive electrode material mixture layer carried on the positive electrode substrate; (b) a negative electrode comprising a negative electrode substrate, and a negative electrode material mixture layer carried on the negative electrode substrate; (c) a separator; (d) a non-aqueous electrolyte comprising a non-aqueous solvent that contains a carbonic ester, and a solute dissolved in the non-aqueous solvent; and (e) a porous film bonded to a surface of at least one of the positive electrode and the negative electrode. The porous film comprises an inorganic filler and a film binder, and the solubility parameter of the film binder is different from the solubility parameter of the non-aqueous solvent by 1 or more.

The present invention also relates to a method for producing a lithium ion secondary battery, including the steps of: (a) mixing an electrode material that comprises an electrode active material and an electrode binder with an electrode formative dispersion medium, to prepare an electrode material mixture slurry; (b) applying the electrode material mixture slurry onto an electrode substrate, and drying the applied slurry, to form an electrode material mixture layer; (c) dissolving a solute into a non-aqueous solvent containing a carbonic ester to prepare a non-aqueous electrolyte; (d) mixing a film forming material that comprises an inorganic filler and a film binder with a film formative dispersion medium to prepare a porous film paste; (e) applying the porous film paste to a surface of the electrode material mixture layer, and drying the applied paste, to form a porous film; and (f) fabricating a battery by using the electrode with the porous film and the non-aqueous electrolyte. The solubility parameter of the film binder is different from the solubility parameter of the non-aqueous solvent by 1 or more.

The film binder preferably contains a thermo-cross-linkable resin, and the curing of the thermo-cross-linkable resin is preferably completed before the injection of the electrolyte in the production process of the battery. Further, the thermo-cross-linkable resin is preferably of the single-liquid-type in terms of simplifying the production process of the porous film paste.

With respect to the electrolyte, the non-aqueous solvent containing a carbonic ester preferably has a solubility parameter from 11.5 to 14.

The solubility parameter of the electrode formative dispersion medium is preferably different from the solubility parameter of the non-aqueous solvent by 1 or more.

The solubility parameter of the film formative dispersion medium is preferably different from the solubility parameter of the non-aqueous solvent by 1 or more.

Effects of the Invention

The present invention can provide a homogeneous applied film free from lumps of a binder or unevenness in the production process of a porous film, thereby making it possible to heighten yields and quality. Further, it can prevent closure of the pores of the porous film due to swelling of the film binder with an electrolyte and prevent a decrease in the conductivity of the electrolyte caused by dissolution of the film binder into the electrolyte, so that it is possible to avoid degradation of battery performance.

Brief Description of Drawings

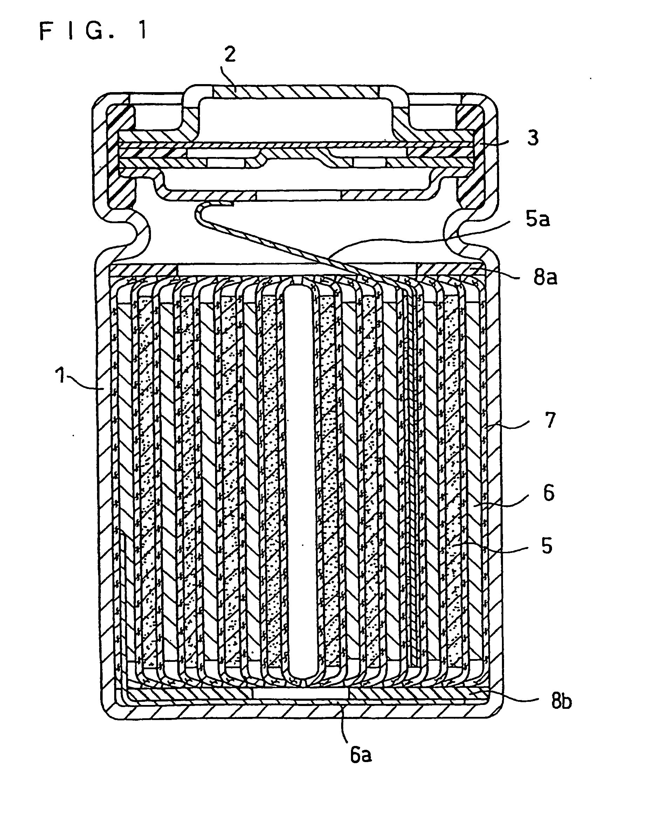

FIG. 1 is a longitudinal sectional view of an exemplary cylindrical lithium ion secondary battery.

Best Mode for Carrying Out the Invention

The mode of the lithium ion secondary battery according to the present invention is not particularly limited and encompass various types such as cylindrical, rectangular, and layered types. However, the present invention is effective in cylindrical or rectangular batteries with an electrode plate assembly composed of a positive electrode and a negative electrode that are wound together with a separator interposed therebetween.

FIG. 1 is a longitudinal sectional view of an example of a common cylindrical lithium ion secondary battery. A positive electrode 5 and a negative electrode 6 are wound together with a separator 7 interposed therebetween, thereby forming a columnar electrode plate assembly. The positive electrode 5 is connected with one end of a positive electrode lead 5a, while the negative electrode 6 is connected with one end of a negative electrode lead 6a. The electrode plate assembly impregnated with a non-aqueous electrolyte is placed in the space inside a battery can 1 while being sandwiched between an upper insulating ring 8a and a lower insulating ring 8b. The separator is interposed between the electrode plate assembly and the inner face of the battery can 1. The other end of the positive electrode lead 5a is welded to the backside of a battery lid 2, while the other end of the negative electrode lead 6a is welded to the inner bottom face of the battery can 1. The opening of the battery can 1 is closed with the battery lid 2 around which an insulating packing 3 is fitted.

Although not shown in FIG. 1, an electronically insulating porous film is bonded to a surface of at least one of the positive electrode and the negative electrode. The porous film contains a particulate filler and a film binder. In the event that an internal short-circuit occurs and the separator shrinks due to a large amount of heat, the porous film performs the function of preventing a direct contact between the positive electrode material mixture or current collector thereof and the negative electrode material mixture or current collector thereof instead of the separator. It should be understood that FIG. 1 shows merely one mode of the lithium ion secondary battery of the present invention, and that the applicable range of the present invention is not limited to only the one as shown in FIG. 1.

The positive electrode comprises a positive electrode substrate and a positive electrode material mixture layer carried thereon. The positive electrode substrate is preferably aluminum foil or the like. The positive electrode material mixture layer usually contains a positive electrode active material, a positive electrode binder, and a conductive agent. The negative electrode comprises a negative electrode substrate and a negative electrode material mixture layer carried thereon. The negative electrode substrate is preferably copper foil, nickel foil, or the like. The negative electrode material mixture layer usually contains a negative electrode active material and a negative electrode binder.

In the present invention, the film binder of the porous film has a solubility parameter that is different from the solubility parameter of non-aqueous solvent of the non-aqueous electrolyte by 1 or more. When the solubility parameter of the film binder is different form the solubility parameter of non-aqueous solvent of the non-aqueous electrolyte by 1 or more, it is possible to significantly suppress the swelling of the porous film with the non-aqueous electrolyte.

The non-aqueous electrolyte used in the lithium ion secondary battery contains a non-aqueous solvent containing a carbonic ester and contains a solute dissolved therein. The solubility parameter of the non-aqueous solvent containing a carbonic ester is close to the solubility parameter of NMP. Therefore, conventional film binders that dissolve in NMP, i.e., resins whose solubility parameters are close to the solubility parameter of the electrolyte are not preferable in the present invention.

If the difference between the solubility parameter of the film binder and the solubility parameter of non-aqueous solvent of the non-aqueous electrolyte is less than 1, it is not possible to suppress the swelling of the porous film with the non-aqueous electrolyte. In order to dramatically improve the life characteristics of the lithium secondary battery, the difference between the above-mentioned solubility parameters is desirably 1 or more, and more desirably 1.5 or more.

The solubility parameter (SP) of a substance is represented by the following formula.

$$(SP)^2 = \Delta E/V = (\Delta H - RT)/V = (C/M)(\Delta H - RT)\ (cal/cm^3)^{1/2}$$

$\Delta E$: evaporation energy (cal/mol)
V: molecular volume (ml/mol)
$\Delta H$: latent heat of evaporation (cal/mol)
R: gas constant (cal/mol)
C: density (g/ml)
M: molecular weight
T: absolute temperature (K)

The solubility parameter of the non-aqueous solvent containing a carbonic ester is, for example 11.5 to 14. Examples of carbonic esters include ethylene carbonate (EC, solubility parameter: 14.7), propylene carbonate (PC, solubility parameter: 13.3), dimethyl carbonate (DMC, solubility parameter: 9.9), diethyl carbonate (DEC, solubility parameter: 8.8), and methyl ethyl carbonate (MEC). Such carbonic esters may be used singly, but the use of two or more of them in combination is preferable. In the case of using a solvent mixture composed of a combination of two or more of them, the product (SPnVn) of the solubility parameter (SPn) of each component and the volume ratio (Vn) of each component is obtained and the sum ($\Sigma$ SPnVn) of these products is obtained. This sum can be used as the solubility parameter of the solvent mixture.

The resin used as the film binder is preferably a thermo-cross-linkable resin in order to suppress the swelling of the porous film with the non-aqueous electrolyte. As used herein, the thermo-cross-linkable resin refers to a resin that is capable of cross-linking reaction when heated. Before heated, the thermo-cross-linkable resin is substantially capable of dissolving in a film formative dispersion medium, so it is suited for preparing a paste for a film. After heated, i.e., when its cross-linking reaction proceeds due to heat-treatment after the formation of a applied film, the dissolution into the electrolyte or the swelling with the electrolyte can be prevented, so that the discharge rate characteristics and life characteristics of the battery can be enhanced even under severe use conditions at high temperatures. It should be noted that in the instant specification, the thermo-cross-linkable resin may also be referred to as curable resin. Also, "curing" as used herein refers to cross-linking, and a thermo-cross-linkable resin that has cross-linked is also referred to as a cured resin. The solubility of the cured resin into the non-aqueous electrolyte (the weight % of the part of the cured resin which is to be dissolved in the electrolyte) is preferably 5% by weight or less.

In order to provide the thermo-cross-linkable resin with the above-mentioned characteristics, the thermo-cross-linkable resin preferably has a cross-linkable group that is capable of forming a cross-linked structure by heating. Examples of cross-linkable groups include an epoxy group, a hydroxyl group, an N-methylol amide group (N-oxymethylamide group), and an oxazolyl group.

The thermo-cross-linkable resin as the film binder is preferably a resin with a masked cross-linkable site, since it is easy to handle and the cross-linking reaction can be easily controlled. As used herein, "masked cross-linkable site" refers to an active site that is temporarily deactivated by a method such as covering by a molecular chain, or an active site that is produced when molecular structure is changed. When a resin with a masked cross-linkable site is heated to a predetermined temperature, the masked cross-linkable site is activated (unmasked), so that the cross-linking reaction starts.

Further, the thermo-cross-linkable resin with a masked cross-linkable site is more preferably of single-liquid-type, in terms of simplifying the production process of the porous film paste. In the case of a conventional two-liquid-type thermo-cross-linkable resin without masked cross-linkable site which is used in combination with a cross-linking agent, its cross-linking reaction proceeds in the preparation process of a porous film paste, for example, the mixing step of a film forming mixture and a film formative dispersion medium. Therefore, the porous film paste becomes excessively thick and the viscosity of the porous film paste and its state of dispersion also become unstable during storage. As a result, the application step of the porous film paste also becomes unstable. On the other hand, the use of a single-liquid-type thermo-cross-linkable resin with a masked cross-linkable site makes it possible to improve the above-mentioned problem.

As used herein, the single-liquid-type resin refers to a curing resin that remains in liquid state even when it is left at a predetermined temperature for a given period of time. The single-liquid-type resin used in the present invention is desirably a stable one such that even when it is mixed with a dispersion medium and left, for example, at 40°C for 72 hours, its cross-linking reaction proceeds only by 5% or less. The degree of progress of cross-linking reaction can be determined, for example, by differential scanning calorimetry (DSC).

The resin used as the film binder, particularly single-liquid-type thermo-cross-linkable resin, preferably has a weight-average molecular weight of 3000 or more and 300000 or less. If the weight-average molecular weight is less than 3000, in the porous film paste in which the particulate filler is dispersed, sedimentation of the particulate filler may occur. Also, if the weight-average molecular weight exceeds 300000, the viscosity of the porous film paste may become too high.

The resin used as the film binder, particularly single-liquid-type thermo-cross-linkable resin, preferably contains a hydrophilic group with a high degree of dissociation in the molecular chain, because of the good balance between the cross-linking characteristics upon heating and the stability of the dispersion state of the particulate filler in the porous film paste. Preferable examples of hydrophilic groups with a high degree of dissociation are groups containing sulfur or phosphorus (strong acid salt groups), such as a sulfuric acid group, a sulfonic acid group, a phosphoric acid group, an acidic phosphoric ester group, and a phosphonic acid group, and strong electrolyte groups such as a quaternary ammonium group.

A resin containing a hydrophilic group with a high degree of dissociation can be obtained, for example, by copolymerizing a monomer containing a hydrophilic group with a high degree of dissociation with a monomer capable of copolymerizing therewith. Examples of monomers containing a hydrophilic group with a high degree of dissociation include monomers containing a sulfur-containing strong acid salt group, such as unsaturated organic sulfonate and unsaturated organic sulfate, monomers containing a phosphorus-containing strong acid salt group, such as unsaturated organic phosphate and unsaturated organic phosphonate, and unsaturated monomers containing a quaternary ammonium salt group.

Examples of monomers capable of copolymerizing with a monomer containing a hydrophilic group with a high degree of dissociation include alkyl acrylates such as methyl acrylate, n-propyl acrylate, isopropyl acrylate, t-butyl acrylate, hexyl acrylate, cyclohexyl acrylate, dodecyl acrylate, and lauryl acrylate; alkyl methacrylates such as methyl methacrylate, n-propyl methacrylate, isopropyl mathacrylate, t-butyl methacrylate, hexyl methacrylate, cyclohexyl methacrylate, dodecyl methacrylate, and lauryl mathacrylate; alkyl esters of unsaturated polyfunctional carboxylic acid such as dimethyl fumarate, diethyl maleate, and butyl benzyl maleate; unsaturated carboxylic esters containing an alkoxy group such as 2-methoxyethyl acrylate and 2-methoxyethyl methacrylate; $\alpha,\beta$-unsaturated nitriles such as acrylonitrile and methacrylonitrile; vinyl carboxylates such as vinyl acetate and vinyl propionate; halogenated olefins such as vinyl chloride, vinyl fluoride, vinyl bromide, vinylidene chloride, vinylidene fluoride, trifluoroethylene, tetrafluoroethylene, and hexafluoropropylene; vinyl ethers such as methyl vinyl ether, isobutyl vinyl ether, and cetyl vinyl ether; unsaturated carboxylic acids such as maleic acid and itaconic acid, unsaturated carboxylic anhydrides such as maleic anhydride and itaconic anhydride, unsaturated carboxamides such as (meth)acrylamide and N,N-dimethyl(meth)acrylamide; $\alpha$-olefins such as ethylene and propylene; vinylidene cyanide. Particularly, copolymers containing an acrylonitrile unit are preferable since it has good balance between flexibility and strength.

The method for copolymerizing a monomer containing a hydrophilic group with a high degree of dissociation with a monomer capable of copolymerizing therewith is not particularly limited, and examples which may be used include solution polymerization, suspension polymerization, and emulsion polymerization. Examples of polymerization initiators used for polymerization include organic peroxides such as lauroyl peroxide, diisopropyl peroxydicarbonate, di-2-ethylhexyl peroxydicarbonate, t-butyl peroxypivalate, and 3,5,5-trimethyl hexanoyl peroxide; azo compounds such as $\alpha, \alpha'$-azobisisobutyronitrile; and persulfates such as ammonium persulfate and potassium persulfate.

The single-liquid-type resin with a masked cross-linkable site desirably contains a polyacrylonitrile chain. This is because a resin containing a polyacrylonitrile chain is excellent in the balance between flexibility and strength. For example, near the center of a columnar electrode plate assembly, the electrode plates form a cylinder whose radius is very small, usually approximately 0.5 to 1.5 mm. Thus, the porous film bonded to the electrode plate surface is also subjected to the same degree of bending. Therefore, it is desired to form a porous film with excellent flexibility that will not become damaged even if it is subjected to such bending.

The thermo-cross-linkable resin as the film binder is preferably one whose cross-linking reaction proceeds promptly at 100°C or higher. Thus, the temperature at which the masked cross-linkable site is activated (unmasked) is preferably 100°C or higher. If the temperature at which the cross-linkable site is activated is less than 100°C, in the preparation process of the porous film paste, for example, during the mixing of the film forming material and the film formative dispersion medium, the paste temperature becomes too high, so that cross-linking reaction proceeds. As a result, the viscosity of the paste becomes unstable. Also, if the temperature at which cross-linking reaction proceeds is too high, such cross-linking reaction may cause electrode substances such as an active material to deteriorate. Thus, the temperature at which the cross-linkable site is activated is preferably 220°C or lower. The temperature at which the cross-linkable site is activated is defined, for example, as the peak temperature of the endothermic peak by differential scanning calorimetry (DSC).

In addition to thermo-cross-linkable resins or cured resins thereof, it is also possible to use various resin components as the film binder. For example, styrene butadiene rubber (SBR), modified SBR containing an acrylic acid unit or an acrylate unit, polyethylene, polytetrafluoroethylene (PTFE), polyvinylidene fluoride (PVDF), tetrafluoroethylene-hexafluoropropylene copolymer (FEP), polyacrylic acid derivatives, polyacrylonitrile derivatives, etc. may be used. They may be used singly or in combination of two or more of them. Among them, particularly polyacrylic acid derivatives and polyacrylonitrile derivatives are preferred. These derivatives preferably contain at least one selected from the group consisting of a methyl acrylate unit, an ethyl acrylate unit, a methyl methacrylate unit, and an ethyl methacrylate unit, in addition to the acrylic acid unit or/and the acrylonitrile unit.

In the present invention, it is particularly preferable to use a film binder composed only of a thermo-cross-linkable resin or a cured resin thereof, or a film binder comprising a thermo-cross-linkable resin or a cured resin thereof, and other resin component(s). The ratio of the thermo-cross-linkable resin or cured resin thereof to the whole film binder is desirably 50% by weight or more.

Lithium ion secondary batteries are generally produced by the steps of: mixing an electrode material that contains an electrode active material and an electrode binder with an electrode formative dispersion medium, to prepare an electrode material mixture slurry; applying the electrode material mixture slurry onto an electrode substrate and drying the applied slurry to form an electrode material mixture layer; dissolving a solute into a non-aqueous solvent containing a carbonic ester to prepare a non-aqueous electrolyte; and fabricating a battery by using the electrode and the non-aqueous electrolyte thus obtained. The present invention further performs the steps of: mixing a film forming material that contains an inorganic filler and a film binder with a film formative dispersion medium to prepare a porous film paste; and applying the porous film paste to the electrode material mixture layer and drying the applied paste to form a porous film.

When an organic solvent is used as the dispersion medium, it is common to use steam as the heat source of an applied-film drier in order to ensure safety. However, the temperature of an applied-film drier using steam as the heat source usually reaches approximately 130°C or lower. Thus, when NMP with a boiling point of 202°C is used as the dispersion medium, drying takes a long time, thereby impeding an improvement in productivity. It is therefore preferable to use, for example, methyl ethyl ketone (MEK) or cyclohexanone (ANON) as the electrode formative dispersion medium or the film formative dispersion medium. Particularly when methyl ethyl ketone is used as the electrode formative dispersion medium, the amount of water absorbed by the electrode material mixture slurry significantly decreases compared with the conventional NMP, so that the production process is unlikely to be subject to changes in environment. Thus, the viscosity change of the electrode material mixture slurry also decreases and stable application to the electrode substrate becomes possible.

The electrode material mixture slurry can be prepared by mixing an electrode material containing an active material and an electrode binder with an electrode formative dispersion medium. As the electrode formative dispersion medium, it is preferable to use one capable of dissolving the electrode binder. Preferably, the electrode binder to be contained in the electrode material mixture slurry is, for example, 1 to 6 parts by weight per 100 parts by weight of the active material.

Next, the electrode material mixture slurry is applied onto an electrode substrate, and the resultant applied film is heated. Due to the heating, the electrode formative dispersion medium evaporates. The dried applied film of the electrode material mixture is preferably roll pressed to adjust the density of the electrode material mixture layer.

Also, the porous film paste can be prepared by mixing a film forming material containing an inorganic filler and a film binder with a film formative dispersion medium. As the film formative dispersion medium, it is preferable to use one capable of dissolving the film binder. The film binder to be contained in the porous film paste is preferably 1 to 10 parts by weight, and more preferably 3.5 to 10 parts by weight, per 100 parts by weight of the inorganic filler. If the ratio of the film binder is too large, the battery performance tends to degrade, and if the ratio of the film binder is too small, the strength of the porous film may become insufficient.

Thereafter, the porous film paste is applied onto the surface of at least one of the positive electrode and the negative electrode, and the resultant applied film is heated. Due to the heating, the film formative dispersion medium evaporates. Subsequently, in the case of using a film binder containing a thermo-cross-linkable resin, the cross-linking reaction of the thermo-cross-linkable resin is caused to proceed. The resultant porous film has good strength since the thermo-cross-linkable resin is cured. The evaporation of the film formative dispersion medium may be performed at a temperature at which the cross-linking reaction of the film binder hardly proceeds, before the cross-linking reaction of the film binder is caused to proceed. Alternatively, the evaporation of the film formative dispersion medium and the cross-linking reaction of the film binder may be performed at the same time.

The positive electrode active material is preferably a composite lithium oxide. Preferable composite lithium oxides include, but are not particularly limited to, lithium cobaltate ($LiCoO_2$), modified lithium cobaltate, lithium nickelate ($LiNiO_2$), modified lithium nickelate, lithium manganate ($LiMn_2O_4$), modified lithium manganate, and such oxides in which a part of Co, Mn or Ni is replaced with another transition metal element. These modified substances may contain an element such as aluminum or magnesium. Also, they may contain at least two of cobalt, nickel, and manganese. Lithium-containing Mn group transition metal oxides such as $LiMn_2O_4$ are advantageous in that they are abundant on the Earth and therefore low-priced.

The negative electrode active materials which may be used include, but are not particularly limited to, carbon materials such as various natural graphites, various artificial graphites, petroleum coke, carbon fiber, and baked organic polymers, oxides, silicon-containing composite materials such as silicide, various metals and alloy materials.

The positive electrode material mixture layer and the negative electrode material mixture layer may contain a conductive agent. As the conductive agent, acetylene black, ketjen black (registered trademark), and various graphites, etc. may be used. They may be used singly or in combination of two or more of them.

With respect to the electrode binder, various resin materials may be used. The positive electrode binder may be, for example, polytetrafluoroethylene (PTFE), polyacrylic acid derivative rubber particles ("BM-500B (trade name)" available from Zeon Corporation), polyvinylidene fluoride (PVdF), etc. PTFE and BM-500B may be used in combination with CMC, polyethylene oxide (PEO), modified acrylonitrile rubber ("BM-720H (trade name)" available from Zeon Corporation), etc., which serve as the thickener of the raw material paste of the positive electrode material mixture layer. PVdF has the function as the positive electrode binder and the function as the thickener even when used singly.

The negative electrode binder is preferably a rubber-like polymer, although the same materials exemplified as the positive electrode binder may also be used. The rubber-like polymer preferably contains a styrene unit and a butadiene unit. For example, styrene-butadiene copolymer (SBR) and modified SBR may be used, but there is no limitation. These rubber-like polymers are preferably in particle form. A particulate rubber-like polymer can bond active material particles together by point-bonding. It is thus possible to obtain a negative electrode material mixture layer having excellent lithium-ion acceptance without covering the surface of the negative electrode active material. When the negative electrode binder is used in combination with a negative electrode thickener, the negative electrode thickener is preferably a watersoluble polymer. Cellulose-type resins are preferable, and carboxymethyl cellulose (CMC) is particularly preferable.

The inorganic filler used in the porous film is desirably electrochemically stable in the operating environment of lithium ion secondary batteries. Also, the inorganic filler is desirably a material that is suited for preparing the porous film paste.

The BET specific surface area of the inorganic filler is, for example, 0.9 $m^2/g$ or more, preferably 1.5 $m^2/g$ or more. Also, in terms of suppressing agglomeration of the inorganic filler and optimizing the fluidity of the porous film paste, the BET specific surface area is preferably not too large, for example, 150 m$^2$/g or less. Also, the mean particle size (number basis median diameter) of the inorganic filler is preferably 0.1 to 5 $\mu$m.

In view of the above, the inorganic filler is preferably an inorganic oxide, and preferable examples which may be used include alumina (aluminum oxide), magnesia (magnesium oxide), calcium oxide, titania (titanium oxide), zirconia (zirconium oxide), talc, and silica. Particularly, the use of $\alpha$-alumina and magnesia is preferred.

The non-aqueous solvent containing a carbonic ester may contain other components than the carbonic ester as long as it has a predetermined solubility parameter range. Examples of other components include, but are not particularly limited to, chain ethers (e.g., dimethyl ether and diethyl ether), cyclic ethers (e.g., tetrahydrofuran), chain carboxylic esters (e.g., methyl formate, methyl acetate, and ethyl propionate), cyclic carboxylic esters (e.g., $\gamma$-butyrolactone and $\gamma$-valerolactone). However, other components are preferably not more than 30% by weight of the whole non-aqueous solvent.

The solute to be dissolved in the non-aqueous solvent is preferably a lithium salt. Examples of lithium salts include lithium hexafluorophosphate (LiPF$_6$), lithium perchlorate (LiClO$_4$), and lithium tetrafluoroborate (LiBF$_4$). The concentration of the solute dissolved in the non-aqueous solvent is normally 0.5 to 2 mol/L.

In order to improve the cycle life of the battery, the non-aqueous electrolyte may be mixed with an additive that will form a good film on the electrode plate. Such additives which may be used include vinylene carbonate (VC), vinyl ethylene carbonate (VEC), modified VC, and modified VEC.

Also, in order to improve the high temperature storage characteristics of the battery, the non-aqueous electrolyte may be mixed with an additive that will cover the positive electrode. Such additives which may be used include propanesultone (PS), ethylene sulfite (ES), modified PS, and modified ES.

Also, in order to improve battery stability upon overcharge, the non-aqueous electrolyte may be mixed with an additive that will form a film upon overcharge. Such additives which may be used include cyclohexyl benzene (CHB) and modified CHB.

The separator is not particularly limited if it is made of a material that is resistant to the operating environment of lithium ion secondary batteries. A microporous sheet comprising polyolefin resin is commonly used as the separator. Examples of polyolefin resin include polyethylene and polypropylene. The microporous sheet may be a mono-layer film containing one kind of polyolefin resin or may be a multi-layer film containing two or more kinds of polyolefin resins. The separator preferably has a thickness of 8 to 30 $\mu$m.

The present invention is hereinafter described more specifically by way of Examples, but the present invention is not limited to the following Examples.

[Example]

First, the evaluation method employed in the following Examples and Comparative Examples is described below.

(Capacity retention rate after 500 cycles)

A completed battery was preliminarily charged and discharged twice and stored in a 45°C environment for 7 days. Thereafter, in a 20°C environment, the following charge/discharge pattern was repeated 500 times. The ratio of the discharge capacity at the 500th cycle to the initial discharge capacity was obtained as the capacity retention rate.

Constant current charge: 1400 mA (cut-off voltage 4.2 V)
Constant voltage charge: 4.2 V (cut-off current 100 mA)
Constant current discharge: 400 mA (cut-off voltage 3 V)

(Measurement of molecular weight of binder)

The weight-average molecular weight of a resin used as the film binder or electrode binder was obtained as a reduced value to polystyrene by gel permeation chromatography using N-methyl-2-pyrrolidone as the solvent.

(Solubility parameter)

When a thermo-cross-linkable resin was used as the film binder or electrode binder, the thermo-cross-linkable resin was heated at 170°C for 24 hours, and then immersed in various solvents with known solubility parameters at 60°C for 72 hours to find the solvent with which the ratio of the volume after immersion to the volume before immersion was the greatest. The solubility parameter of this solvent was used as the solubility parameter of the thermo-cross-linkable resin. The solvents with known solubility parameters used therein were a plurality of solvents whose solubility parameters were different by 0.1 in the range of 8.0 to 12.0. In the case of a binder that does not cross-link, the binder was molded at 100°C or lower and the same method was applied to the molded binder.

Reference Example 1

(a) Preparation of positive electrode

A positive electrode material mixture slurry with a non-volatile component content of 50% by weight was prepared by stirring 100 parts by weight of lithium cobaltate, 4 parts by weight of an acrylonitrile copolymer serving as the positive electrode binder, 1 part by weight of acetylene black, and a suitable amount of an electrode formative dispersion medium with a double-arm kneader. This slurry was applied onto both sides of a 15-$\mu$m-thick aluminum foil serving as a positive electrode substrate and dried at 120°C. Thereafter, the dried applied films were roll pressed to form positive electrode material mixture layers with a density of 3.3 g/cm$^3$. The thickness of the electrode plate composed of the aluminum foil and the positive electrode material mixture layers was adjusted to 160 $\mu$m. Subsequently, the electrode plate was slit to a width such that it was capable of being inserted into a battery can for a cylindrical battery (No. 18650), to obtain a positive electrode hoop.

(b) Preparation of negative electrode

A negative electrode material mixture slurry was prepared by stirring 100 parts by weight of artificial graphite, 2 parts by weight of a styrene-butadiene rubber derivative (rubber component of BM-400B available from Zeon Corporation) serving as a negative electrode binder, 1 part by weight of CMC as a thickener, and a suitable amount of water with a double-arm kneader. This slurry was applied onto both sides of a 10-$\mu$ m-thick copper foil serving as a negative electrode substrate, dried and roll pressed, to form negative electrode material mixture layers with a density of 1.4 g/cm$^3$. The thickness of the electrode plate composed of the copper foil and the negative electrode material mixture layers was adjusted to 180 $\mu$m. Thereafter, the electrode plate was slit to a width such that it was capable of being inserted into the battery can for a cylindrical battery (No. 18650), to obtain a negative electrode hoop.

The positive electrode binders (acrylonitrile copolymers) used were copolymers A to E containing an acrylonitrile unit, a dodecyl acrylate unit, and a butadiene monoxide unit and having different solubility parameters. The weight-average molecular weights of the respective copolymers were as follows.
Copolymer A: 178000
Copolymer B: 155000
Copolymer C: 143000
Copolymer D: 126000
Copolymer E: 137000

The positive electrode formative dispersion media used were electrode formative dispersion media with a solubility parameter equal or similar to the solubility parameter of the positive electrode binder (acrylonitrile copolymer) contained in each positive electrode material mixture slurry.

Specifically, N-methyl-2-pyrrolidone (NMP, solubility parameter: 11.3, boiling point: 202°C) was used as the positive electrode formative dispersion medium for the positive electrode material mixture slurry containing the copolymer A (solubility parameter: 11.3).

Also, cyclohexanone (ANON, solubility parameter: 9.9, boiling point 155°C) was used as the positive electrode formative dispersion medium for the positive electrode material mixture slurry containing the copolymer D (solubility parameter: 9.8) or the copolymer E (solubility parameter: 9.3).

Also, a solvent mixture of N-methyl-2-pyrrolidone and cyclohexanone (weight ratio NMP:ANON = 7:3) was used as the positive electrode formative dispersion medium for the positive electrode material mixture slurry containing the copolymer B (solubility parameter: 10.8) or the copolymer C (solubility parameter: 10.3).

(c) Preparation of non-aqueous electrolyte

A non-aqueous electrolyte was prepared by dissolving LiPF$_6$ at a concentration of 1 mol/L in a solvent mixture (solubility parameter: 11.6) of ethylene carbonate (EC, solubility parameter: 14.7), dimethyl carbonate (DMC, solubility parameter: 9.9), and diethyl carbonate (DEC, solubility parameter: 8.8) in a volume ratio of 4:4:2 and adding 3% by weight of vinylene carbonate (VC).

(d) Fabrication of battery

Using the above-mentioned positive electrodes, negative electrode and non-aqueous electrolyte, 18650 cylindrical batteries were assembled. First, the positive electrode and the negative electrode were cut to a predetermined length. One end of a positive electrode lead was connected to the positive electrode substrate. Also, one end of a negative electrode lead was connected to the negative electrode substrate. Thereafter, the positive electrode and the negative electrode were wound together with a separator comprising a 20-μm-thick polyethylene resin microporous sheet interposed therebetween, to fabricate a columnar electrode plate assembly. The outer face of the electrode plate assembly was covered with the separator. This electrode plate assembly was placed in the space inside the battery can while being sandwiched between an upper insulating ring and a lower insulating ring. Subsequently, 5 g of the above-mentioned non-aqueous electrolyte was injected into the battery can, and the electrode plate assembly was impregnated with the non-aqueous electrolyte in a reduced pressure atmosphere at 133 Pa. The other end of the positive electrode lead was welded to the backside of a battery lid. Also, the other end of the negative electrode lead was welded to the inner bottom face of the battery can. Lastly, the opening of the battery can was closed with the battery lid around which an insulating packing was fitted. In this way, cylindrical lithium ion secondary batteries were completed.

The capacity retention rate of the batteries after 500 charge/discharge cycles was evaluated by the above-mentioned method. Table 1 shows the results.

Table 1 also shows the solubility parameters (SP values) of the positive electrode binders (copolymers A to E) and the difference between the solubility parameter of the non-aqueous solvent and the solubility parameter of each positive electrode binder.

[Table 1]

| Positive electrode binder | Negative electrode binder | SP value of positive electrode binder | Difference from SP value of non-aqueous solvent | Capacity retention rate after 500 cycles (%) |
|---|---|---|---|---|
| PAN A | SBR derivative | 11.3 | 0.3 | 55 |
| PAN B | SBR derivative | 10.8 | 0.8 | 65 |
| PAN C | SBR derivative | 10.3 | 1.3 | 80 |
| PAN D | SBR derivative | 9.8 | 1.8 | 82 |
| PAN E | SBR derivative | 9.3 | 2.3 | 84 |
| SP value : Solubility parameter PAN: Acrylonitrile copolymer SBR: Styrene butadiene rubber | | | | |

Reference Example 2

(a) Preparation of positive electrode

A positive electrode material mixture slurry was prepared by stirring 100 parts by weight of lithium cobaltate, 4 parts by weight of polyvinylidene fluoride (PVdF)(PVdF component of "#1320 (trade name)" available from Kureha Corporation) serving as a positive electrode binder, 3 parts by weight of acetylene black, and a suitable amount of NMP with a double-arm kneader. This slurry was applied onto both sides of a 15-μm-thick aluminum foil serving as a positive electrode substrate, dried, and roll pressed to form positive electrode material mixture layers with a density of 3.3 g/cm$^3$. The thickness of the electrode plate composed of the aluminum foil and the positive electrode material mixture layers was adjusted to 160 μm. Subsequently, the electrode plate was slit to a width such that it was capable of being inserted into a battery can for a cylindrical battery (No. 18650), to obtain a positive electrode hoop.

(b) Preparation of negative electrode

A negative electrode material mixture slurry with a non-volatile component content of 70% by weight was prepared by stirring 100 parts by weight of artificial graphite, 3 parts by weight of an acrylonitrile copolymer serving as a negative electrode binder, and a suitable amount of an electrode formative dispersion medium with a double-arm kneader. This slurry was applied onto both sides of a 10-μm-thick copper foil serving as a negative electrode substrate, followed by drying at 120°C. Thereafter, the dried applied films were roll pressed to form negative electrode material mixture layers with a density of 1.4 g/cm$^3$. The thickness of the electrode plate composed of the copper foil and the negative electrode material mixture layers was adjusted to 180 μm. Thereafter, the electrode plate was slit to a width such that it was capable of being inserted into the battery can for a cylindrical battery (No. 18650), to obtain a negative electrode hoop.

The negative electrode binders used were the same copolymers A to E as those used as the positive electrode binders in Reference Example 1, which contained an acrylonitrile unit, a dodecyl acrylate unit, and a butadiene monoxide unit and had different solubility parameters.

The negative electrode formative dispersion media used were negative electrode formative dispersion media with the same solubility parameter as that of the negative electrode binder (acrylonitrile copolymer) contained in each negative electrode material mixture slurry or a similar solubility parameter. They are the same as those used in Reference Example 1.

(c) Fabrication of battery

Cylindrical lithium ion secondary batteries were completed in the same manner as in Reference Example 1 except for the use of the above-mentioned positive and negative electrodes.

The capacity retention rate of the batteries after 500 charge/discharge cycles was evaluated by the above-mentioned method. Table 2 shows the results. Table 2 also shows the solubility parameters (SP values) of the negative electrode binders (copolymers A to E) and the difference between the solubility parameter of the non-aqueous solvent and the solubility parameter of each negative electrode binder.

[Table 2]

| Positive electrode binder | Negative electrode binder | SP value of negative electrode binder | Difference from SP value of non-aqueous solvent | Capacity retention rate after 500 cycles (%) |
|---|---|---|---|---|
| PVdF | PAN A | 11.3 | 0.3 | 56 |
| PVdF | PAN B | 10.8 | 0.8 | 66 |
| PVdF | PAN C | 10.3 | 1.3 | 80 |
| PVdF | PAN D | 9.8 | 1.8 | 81 |
| PVdF | PAN E | 9.3 | 2.3 | 82 |
| SP value : Solubility parameter<br>PAN: Acrylonitrile copolymer<br>PVdF: Polyvinylidene fluoride | | | | |

Reference Example 3

Cylindrical lithium ion secondary batteries were completed in the same manner as in Reference Example 1 except for the use of the negative electrodes of Reference Example 2. The capacity retention rate of the batteries after 500 charge/discharge cycles was evaluated by the above-mentioned method. Table 3 shows the results.

[Table 3]

| Positive electrode binder | Negative electrode binder | SP value of electrode binder | Difference from SP value of non-aqueous solvent | Capacity retention rate after 500 cycles (%) |
|---|---|---|---|---|
| PAN A | PAN A | 11.3 | 0.3 | 54 |
| PAN B | PAN B | 10.8 | 0.8 | 65 |
| PAN C | PAN C | 10.3 | 1.3 | 80 |
| PAN D | PAN D | 9.8 | 1.8 | 82 |
| PAN E | PAN E | 9.3 | 2.3 | 83 |
| SP value : Solubility parameter<br>PAN : Acrylonitrile copolymer | | | | |

Reference Example 4

A single-liquid-type thermo-cross-linkable acrylonitrile copolymer containing a sulfonic acid group as the hydrophilic group with a high degree of dissociation was used as the positive electrode binder instead of the acrylonitrile copolymer. The single-liquid-type thermo-cross-linkable acrylonitrile copolymer used had a masked cross-linkable site, contained an acrylonitrile unit, a dodecyl acrylate unit, and a butadiene monoxide unit, and had a weight-average molecular weight of 239000. Even when this single-liquid-type thermo-cross-linkable acrylonitrile copolymer was left at 40°C for 72 hours, its cross-linking reaction proceeded only by 5% by weight or less. Also, the solubility of the single-liquid-type thermo-cross-linkable acrylonitrile copolymer that was cured by heating at 170°C for 24 hours into the non-aqueous electrolyte (non-aqueous electrolyte prepared by dissolving $LiPF_6$ at a concentration of 1 mol/L in a solvent mixture of EC, DMC, and DEC in a volume ratio of 4:4:2 and adding 3% by weight of vinylene carbonate (VC)) was 5% by weight or less.

Positive electrode material mixture layers with a density of 3.3 g/cm$^3$ were formed on a positive electrode substrate in the same manner as in Reference Example 1, except for the use of the above-mentioned single-liquid-type thermo-cross-linkable acrylonitrile copolymer with a masked cross-linkable site. Thereafter, the positive electrode material mixture layers were heated at 170°C in a nitrogen gas atmosphere for 24 hours to cross-link the single-liquid-type thermo-cross-linkable acrylonitrile copolymer.

A cylindrical lithium ion secondary battery was completed in the same manner as in Reference Example 1 except for the use of the above-mentioned positive electrode. The capacity retention rate of the battery after 500 charge/discharge cycles was evaluated by the above-mentioned method. Table 4 shows the results. Table 4 also shows the solubility parameter of the positive electrode binder used therein.

Reference Example 5

A positive electrode material mixture slurry was prepared by using a polyacrylonitrile derivative with an unmasked hydroxyl group as the positive electrode binder, instead of the single-liquid-type thermo-cross-linkable acrylonitrile copolymer. 20 parts by weight of polyisocyanate with an isocyanate group (-NCO) at the terminals was added to the positive electrode material mixture slurry per 100 parts by weight of the above-mentioned polyacrylonitrile derivative as the cross-linking agent of the polyacrylonitrile derivative.

Separately, a mixture of 100 parts by weight of the polyacrylonitrile derivative with an unmasked hydroxyl group and 20 parts by weight of the polyisocyanate with an isocyanate group at the terminals was left at 40°C for 72 hours. As a result, its cross-linking reaction proceeded in the mixture in excess of 5% by weight.

A cylindrical lithium ion secondary battery was completed in the same manner as in Reference Example 4 except for the use of this positive electrode material mixture slurry. Specifically, the positive electrode material mixture layers were heated at 170°C in a nitrogen gas atmosphere for 24 hours to cross-link the polyacrylonitrile derivative. The capacity retention rate of the battery after 500 charge/discharge cycles was evaluated by the above-mentioned method. Table 4 shows the results. Table 4 also shows the solubility parameter of the positive electrode binder used therein.

.

[Table 4]

| Positive electrode binder | Negative electrode binder | SP value of positive electrode binder | Difference from SP value of non-aqueous solvent | Capacity retention rate after 500 cycles (%) |
|---|---|---|---|---|
| Single-liquid type therm-cross-linkable PAN | SBR derivative | 9.8 | 1.8 | 85 |
| Hydroxyl-group containing PAN derivative + Cross-linking agent | SBR derivative | 9.8 | 1.8 | 80 |
| SP value: Solubility parameter<br>PAN: Acrylonitrile copolymer<br>PAN derivative: Polyacrylonitrile derivative<br>SBR: Styrene butadiene rubber | | | | |

Example 1

(a) Preparation of porous film paste

100 parts by weight of α-alumina with a median diameter of 0.3 μm "AKP50 (trade name)" available from Sumitomo Chemical Co., Ltd. serving as an inorganic filler, 4 parts by weight of an acrylonitrile copolymer as a film binder, and a suitable amount of a film formative dispersion medium were stirred for 30 minutes with a dissolver serving as a preliminary stirring device. The preliminarily stirred mixture was further stirred by means of a bead mill with an internal volume of 2 liters (KDC-PAILOT-A type available from Shinmaru Enterprises Corporation) with residence time being set to 10 minutes, to prepare a porous film paste having a non-volatile component of 45% by weight. The bead mill is equipped with a disc and designed to stir the content of the mill by the rotation of the disc. As used herein, the residence time is defined as the value obtained by dividing the internal volume of the mill by the flow rate at which the preliminarily stirred mixture is fed into the mill, and corresponds to the dispersion process time.
The film binders used were the same copolymers A to E as those used as the positive electrode binders in Reference Example 1, which contained an acrylonitrile unit, a dodecyl acrylate unit, and a butadiene monoxide unit and had different solubility parameters.
The film formative dispersion media used were film formative dispersion media with a solubility parameter equal or similar to the solubility parameter of the film binder (acrylonitrile copolymer) contained in each porous film paste. They are the same as those used as the positive electrode formative dispersion media in Reference Example 1.

(b) Formation of porous film

A negative electrode was produced in the same manner as in Reference Example 1, and the above-mentioned porous film paste was applied onto the surfaces of the negative electrode material mixture layers and dried at 120°C to obtain dried applied films of 10 μm in thickness bonded to the negative electrode.

(c) Fabrication of battery

Cylindrical lithium ion secondary batteries were completed in the same manner as in Reference Example 1 except for the use of the negative electrodes with the above-mentioned porous films bonded to the surfaces, the use of the same positive electrode as that of Reference Example 2, and the use of a 10-μm-thick polyethylene resin microporous sheet as the separator.
The capacity retention rate of the batteries after 500 charge/discharge cycles was evaluated by the above-mentioned method. Table 5 shows the results. Table 5 also shows the solubility parameters (SP values) of the film binders (copolymers A to E) and the difference between the solubility parameter of the non-aqueous solvent and the solubility parameter of each film binder.
[Table 5]

| Film binder | Positive electrode binder | Negative electrode binder | SP value of film binder | Difference from SP value of non-aqueous solvent | Capacity retention rate after 500 cycles (%) |
|---|---|---|---|---|---|
| PAN A | PVdF | SBR derivative | 11.3 | 0.3 | 50 |
| PAN B | PVdF | SBR derivative | 10.8 | 0.8 | 60 |
| PAN C | PVdF | SBR derivative | 10.3 | 1.3 | 86 |
| PAN D | PVdF | SBR derivative | 9.8 | 1.8 | 90 |
| PAN E | PVdF | SBR derivative | 9.3 | 2.3 | 91 |
| SP value: Solubility parameter<br>PAN: Acrylonitrile copolymer<br>SBR: Styrene butadiene rubber<br>PVdF: Polyvinylidene fluoride | | | | | |

Example 2

A single-liquid-type thermo-cross-linkable acrylonitrile copolymer containing a sulfonic acid group as the hydrophilic group with a high degree of dissociation was used as the film binder instead of the above-mentioned acrylonitrile copolymer. The single-liquid-type thermo-cross-linkable acrylonitrile copolymer used had a masked cross-linkable site, contained an acrylonitrile unit, a dodecyl acrylate unit, and a butadiene monoxide unit, and had a weight-average molecular weight of 239000. Even when this single-liquid-type thermo-cross-linkable acrylonitrile copolymer was left at 40°C for 72 hours, its cross-linking reaction proceeded only by 5% by weight or less. Also, the solubility of the single-liquid-type thermo-cross-linkable acrylonitrile copolymer that was cured by heating at 170°C for 24 hours into the predetermined non-aqueous electrolyte was 5% by weight or less.

A porous film paste was prepared in the same manner as in Example 1, except for the use of the above-mentioned single-liquid-type thermo-cross-linkable acrylonitrile copolymer with a masked cross-linkable site. Using this, a porous film was formed on the negative electrode material mixture layers in the same manner as in Example 1. Thereafter, the negative electrode was heated at 170°C in a nitrogen gas atmosphere for 24 hours to cross-link the acrylonitrile copolymer.

A cylindrical lithium ion secondary battery was completed in the same manner as in Example 1 except for the formation of the above-mentioned porous films. The capacity retention rate of the battery after 500 charge/discharge cycles was evaluated by the above-mentioned method. Table 6 shows the results. Table 6 also shows the solubility parameter of the film binder used therein.

Example 3

A porous film paste was prepared by using a polyacrylonitrile derivative with an unmasked hydroxyl group as the film binder, instead of the single-liquid-type thermo-cross-linkable acrylonitrile copolymer. 20 parts by weight of polyisocyanate with an isocyanate group (-NCO) at the terminals was added to the porous film paste per 100 parts by weight of the above-mentioned polyacrylonitrile derivative as the cross-linking agent of the polyacrylonitrile derivative.

Separately, a mixture of 100 parts by weight of the polyacrylonitrile derivative with an unmasked hydroxyl group and 20 parts by weight of the polyisocyanate with an isocyanate group at the terminals was left at 40°C for 72 hours. As a result, its cross-linking reaction proceeded in an amount in excess of 5% by weight of the mixture.

A cylindrical lithium ion secondary battery was completed in the same manner as in Example 2 except for the use of this porous film paste. Specifically, the applied films of the porous film paste on the negative electrode material mixture layers were dried, and the negative electrode was then heated at 170°C in a nitrogen gas atmosphere for 24 hours to cross-link the polyacrylonitrile derivative. The capacity retention rate of the battery after 500 charge/discharge cycles was evaluated by the above-mentioned method. Table 6 shows the results. Table 6 also shows the solubility parameter of the film binder used therein.

[Table 6]

| Film binder | SP value of film binder | Difference from SP value of non-aqueous solvent | Capacity retention rate after 500 cycles (%) |
|---|---|---|---|
| Single-liquid type thermo-cross-linkable PAN | 9.8 | 1.8 | 91 |
| Hydroxyl-group containing PAN derivative + Cross-linking agent | 9.8 | 1.8 | 90 |
| SP value: Solubility parameter<br>PAN: Acrylonitrile copolymer<br>PAN derivative: Polyacrylonitrile derivative | | | |

The solubility parameter of non-aqueous solvent of the non-aqueous electrolyte was 11.6.
The difference between the solubility parameter of non-aqueous solvent of the non-aqueous electrolyte and the solubility parameter of the acrylonitrile copolymer A (solubility parameter of NMP) was 0.3.
The difference between the solubility parameter of non-aqueous solvent of the non-aqueous electrolyte and the solubility parameter of the acrylonitrile copolymer B was 0.8.
The difference between the solubility parameter of non-aqueous solvent of the non-aqueous electrolyte and the solubility parameter of the acrylonitrile copolymer C was 1.3.

The difference between the solubility parameter of non-aqueous solvent of the non-aqueous electrolyte and the solubility parameter of the acrylonitrile copolymer D was 1.8.

The difference between the solubility parameter of non-aqueous solvent of the non-aqueous electrolyte and the solubility parameter of the acrylonitrile copolymer E was 2.3.

As described above, the difference in solubility parameter between each of the acrylonitrile copolymers C to D and the non-aqueous solvent of the non-aqueous electrolyte was more than 1.0. Therefore, as shown in Tables 1 to 3 and Table 5, when the acrylonitrile copolymers C to D were used as the film binders, their capacity retention rates after 500 charge/discharge cycles were good. Also, when the single-liquid-type thermo-cross-linkable acrylonitrile copolymer with a solubility parameter of 9.8, which was the same as that of the acrylonitrile copolymer D, was used, its capacity retention rate was better.

On the other hand, the difference in solubility parameter between each of the acrylonitrile copolymers A and B and the non-aqueous solvent of the non-aqueous electrolyte was less than 1.0. Therefore, when the acrylonitrile copolymers A and B were used as the film binders, their capacity retention rates after 500 charge/discharge cycles were insufficient, as shown in Tables 1 to 3 and Table 5.

Industrial Applicability

As described above, the present invention can provide a lithium ion secondary battery whose capacity is prevented from lowering upon repeated charge/discharge cycles.

**Claims**

1. A lithium ion secondary battery comprising:

   a positive electrode comprising a positive electrode substrate, and a positive electrode material mixture layer carried on said positive electrode substrate;
   a negative electrode comprising a negative electrode substrate, and a negative electrode material mixture layer carried on said negative electrode substrate;
   a separator;
   a non-aqueous electrolyte comprising a non-aqueous solvent that contains a carbonic ester, and a solute dissolved in said non-aqueous solvent; and
   a porous film bonded to a surface of at least one of said positive electrode and said negative electrode;
   wherein said porous film comprises an inorganic filler and a film binder, and
   the solubility parameter of said film binder is different from the solubility parameter of said non-aqueous solvent by 1 or more $(cal/cm^3)^{½}$ .

2. The lithium ion secondary battery in accordance with claim 1, wherein said film binder comprises a cured thermo-cross-linkable resin.

3. The lithium ion secondary battery in accordance with claim 2, wherein said thermo-cross-linkable resin is of single-liquid-type.

4. The lithium ion secondary battery in accordance with claim 1, wherein said non-aqueous solvent containing a carbonic ester has a solubility parameter from 11.5 to 14 $(cal/cm^3)^{½}$.

5. A method for producing a lithium ion secondary battery, comprising the steps of:

   mixing an electrode material that comprises an electrode active material and an electrode binder with an electrode formative dispersion medium, to prepare an electrode material mixture slurry;
   applying said electrode material mixture slurry onto an electrode substrate, and drying said applied slurry, to form an electrode material mixture layer;
   dissolving a solute into a non-aqueous solvent containing a carbonic ester to prepare a non-aqueous electrolyte;
   mixing a film forming material that comprises an inorganic filler and a film binder with a film formative dispersion medium to prepare a porous film paste;
   applying said porous film paste to a surface of said electrode material mixture layer, and drying said applied paste, to form a porous film: and

fabricating a battery by using the electrode with said porous film and said non-aqueous electrolyte; wherein the solubility parameter of said film binder is different from the solubility parameter of said non-aqueous solvent by 1 or more $(cal/cm^3)^{1/2}$.

6. The method for producing the lithium ion secondary battery in accordance with claim 5, wherein said film binder comprises a thermo-cross-linkable resin.

7. The method for producing the lithium ion secondary battery in accordance with claim 6, wherein said thermo-cross-linkable resin is of single-liquid-type.

8. The method for producing the lithium ion secondary battery in accordance with claim 5, wherein said non-aqueous solvent containing a carbonic ester has a solubility parameter from 11.5 to 14 $(cal/cm^3)^{1/2}$.

9. The method for producing the lithium ion secondary battery in accordance with claim 5, wherein the solubility parameter of said electrode formative dispersion medium is different from the solubility parameter of said non-aqueous solvent by 1 or more $(cal/cm^3)^{1/2}$.

10. The method for producing the lithium ion secondary battery in accordance with claim 5, wherein the solubility parameter of said film formative dispersion medium is different from the solubility parameter of said non-aqueous solvent by 1 or more $(cal/cm^3)^{1/2}$.


**Patentansprüche**

1. Lithium-Ionen-Sekundärbatterie, umfassend:

   eine positive Elektrode, umfassend ein Substrat der positiven Elektrode, und eine auf dem Substrat der positiven Elektrode getragene Materialgemischschicht der positiven Elektrode;
   eine negative Elektrode, umfassend ein Substrat der negativen Elektrode, und eine auf dem Substrat der negativen Elektrode getragene Materialgemischschicht der negativen Elektrode;
   einen Separator;
   einen nicht wässrigen Elektrolyten, umfassend ein nicht wässriges Lösungsmittel, das einen Kohlensäureester enthält, und ein im nicht wässrigen Lösungsmittel gelöstes Solut; und
   einen porösen Film, der an eine Fläche zumindest einer von der positiven Elektrode und der negativen Elektrode gebondet ist;
   wobei der poröse Film einen anorganischen Füllstoff und einen Filmbinder umfasst, und
   sich der Löslichkeitsparameter des Filmbinders vom Löslichkeitsparameter des nicht wässrigen Lösungsmittels um 1 oder mehr unterscheidet, $(cal/cm^3)^{1/2}$.

2. Lithium-Ionen-Sekundärbatterie nach Anspruch 1, wobei der Filmbinder ein ausgehärtetes thermovernetzbares Harz umfasst.

3. Lithium-Ionen-Sekundärbatterie nach Anspruch 2, wobei das thermovernetzbare Harz vom Einzelflüssigkeitstyp ist.

4. Lithium-Ionen-Sekundärbatterie nach Anspruch 1, wobei das nicht wässrige Lösungsmittel, das einen Kohlensäureester enthält, einen Löslichkeitsparameter von 11,5 bis 14 aufweist, $(cal/cm^3)^{1/2}$.

5. Verfahren zur Produktion einer Lithium-Ionen-Sekundärbatterie, umfassend die Schritte:

   Mischen eines Elektrodenrnaterials, das ein Elektrodenaktivmaterial und einen Elektrodenbinder umfasst, mit einem Elektrodenbildungsdispersionsmedium, um eine Elektrodenmaterialgemischaufschlämmung herzustellen;
   Auftragen der Elektrodenmaterialgemischaufschlämmung auf ein Elektrodensubstrat, und Trocknen der aufgetragenen Aufschlämmung, um eine Elektrodenmaterialgemischschicht zu bilden;
   Lösen eines Soluts in einem nicht wässrigen Lösungsmittel, das einen Kohlensäureester enthält, um einen nicht wässrigen Elektrolyten herzustellen;
   Mischen eines filmbildenden Materials, das einen anorganischen Füllstoff und einen Filmbinder umfasst, mit einem Filmbildungsdispersionsmedium, um eine poröse Filmpaste herzustellen;

Auftragen der porösen Filmpaste auf eine Fläche der Elektrodenmaterialgemischschicht, und Trocknen der aufgetragenen Paste, um einen porösen Film zu bilden; und

Fertigen einer Batterie durch Verwenden der Elektrode mit dem porösen Film und des nicht wässrigen Elektrolyten;

wobei sich der Löslichkeitsparameter des Filmbinders vom Löslichkeitsparameter des nicht wässrigen Lösungsmittels um 1 oder mehr unterscheidet, $(cal/cm^3)^{1/2}$.

6. Verfahren zur Produktion der Lithium-Ionen-Sekundärbatterie nach Anspruch 5, wobei der Filmbinder ein thermovemetzbares Harz umfasst.

7. Verfahren zur Produktion der Lithium-Ionen-Sekundärbatterie nach Anspruch 6, wobei das thermovemetzbare Harz vom Einzelflüssigkeitstyp ist.

8. Verfahren zur Produktion der Lithium-Ionen-Sekundärbatterie nach Anspruch 5, wobei das nicht wässrige Lösungsmittel, das einen Kohlensäureester enthält, einen Löslichkeitsparameter von 11,5 bis 14 aufweist, $(cal/cm^3)^{1/2}$.

9. Verfahren zur Produktion der Lithium-Ionen-Sekundärbatterie nach Anspruch 5, wobei sich der Löslichkeitsparameter des Elektrodenbildungsdispersionsmediums vom Löslichkeitsparameter des nicht wässrigen Lösungsmittels um 1 oder mehr unterscheidet, $(cal/cm^3)^{1/2}$.

10. Verfahren zur Produktion der Lithium-Ionen-Sekundärbatterie nach Anspruch 5, wobei sich der Löslichkeitsparameter des Filmbildungsdispersionsmediums vom Löslichkeitsparameter des nicht wässrigen Lösungsmittels um 1 oder mehr unterscheidet, $(cal/cm^3)^{1/2}$.

**Revendications**

1. Batterie secondaire au lithium-ion comprenant :

   une électrode positive comprenant un substrat d'électrode positive, et une couche de mélange de matériau d'électrode positive maintenue sur ledit substrat d'électrode positive ;
   une électrode négative comprenant un substrat d'électrode négative, et une couche de mélange de matériau d'électrode négative maintenue sur ledit substrat d'électrode négative ;
   un séparateur ;
   un electrolyte non aqueux comprenant un solvant non aqueux qui contient de l'ester carbonique, et un soluté dissous dans ledit solvant non aqueux ; et
   un film poreux lié à une surface d'au moins l'une de ladite électrode positive et de ladite électrode négative ;
   où ledit film poreux comprend une charge inorganique et un liant de film, et
   le paramètre de solubilité dudit liant de film est différent du paramètre de solubilité dudit solvant non aqueux par 1 $(cal/cm^3)^{1/2}$ ou plus.

2. Batterie secondaire au lithium-ion selon la revendication 1, dans laquelle ledit liant de film comprend une résine thermo-réticulable durcie.

3. Batterie secondaire au lithium-ion selon la revendication 2, dans laquelle ladite résine thermo-réticulable est de type liquide simple.

4. Batterie secondaire au lithium-ion selon la revendication 1, dans laquelle ledit solvant non aqueux contenant de l'ester carbonique présente un paramètre de solubilité allant de 11,5 à 14 $(cal/cm^3)^{1/2}$.

5. Procédé destiné à produire une batterie secondaire au lithium-ion, comprenant les étapes consistant :

   à mélanger un matériau d'électrode qui comprend un matériau actif d'électrode et un liant d'électrode avec un milieu de dispersion formant une électrode, pour préparer une suspension de mélange de matériau d'électrode ;
   à appliquer ladite suspension de mélange de matériau d'électrode sur un substrat d'électrode, et à sécher ladite suspension appliquée, pour former une couche de mélange de matériau d'électrode ;
   à dissoudre un soluté dans un solvant non aqueux contenant de l'ester carbonique pour préparer un électrolyte non aqueux ;

à mélanger un matériau formant un film qui comprend une charge inorganique et un liant de film avec un milieu de dispersion formant un film pour préparer une pâte de film poreux ;

à appliquer ladite pâte de film poreux à une surface de ladite couche de mélange de matériau d'électrode, et à sécher ladite pâte appliquée, pour former un film poreux ; et

à fabriquer une batterie en utilisant l'électrode avec ledit film poreux et ledit électrolyte non aqueux ;

où le paramètre de solubilité dudit liant de film est différent du paramètre de solubilité dudit solvant non aqueux par 1 $(\text{cal/cm}^3)^{1/2}$ ou plus.

6. Procédé destiné à produire la batterie secondaire au lithium-ion selon la revendication 5, dans lequel ledit liant de film comprend une résine thermo-réticulable.

7. Procédé destiné à produire la batterie secondaire au lithium-ion selon la revendication 6, dans lequel ladite résine thermo-réticulable est de type liquide simple.

8. Procédé destiné à produire la batterie secondaire au lithium-ion selon la revendication 5, dans lequel ledit solvant non aqueux contenant de l'ester carbonique présente un paramètre de solubilité allant de 11,5 à 14 $(\text{cal/cm}^3)^{1/2}$.

9. Procédé destiné à produire la batterie secondaire au lithium-ion selon la revendication 5, dans lequel le paramètre de solubilité dudit milieu de dispersion formant une électrode est différent du paramètre de solubilité dudit solvant non aqueux par 1 $(\text{cal/cm}^3)^{1/2}$ ou plus.

10. Procédé destiné à produire la batterie secondaire au lithium-ion selon la revendication 5, dans lequel le paramètre de solubilité dudit milieu de dispersion formant un film est différent du paramètre de solubilité dudit solvant non aqueux par 1 $(\text{cal/cm}^3)^{1/2}$ ou plus.

F I G. 1

## EP 1 746 675 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3371301 B

**Non-patent literature cited in the description**

- Dictionary of Physics. BAIFUKAN Co., Ltd,